Europäisches Patentamt

European Patent Office

Office européen des brevets

(19)

(11) EP 0 562 925 B1

(12) **FASCICULE DE BREVET EUROPEEN**

(45) Date de publication et mention
de la délivrance du brevet:
**01.09.1999 Bulletin 1999/35**

(51) Int Cl.⁶: **H04B 10/06**

(21) Numéro de dépôt: **93400708.9**

(22) Date de dépôt: **19.03.1993**

(54) **Photorécepteur en onde guidée à base de puits quantiques de matériaux semiconducteurs, notamment pour système de communication cohérent en diversité de polarisation**

Wellenleiter-Photoempfänger aus Halbleitermaterial mit mehrfachen Quantenbrunnen für kohärente Übertragung mit Polarisationsdiversität

Semi-conductor waveguide photoreceiver with multiple quantum wells for polarisation diversity communications systems

(84) Etats contractants désignés:
**DE GB**

(30) Priorité: **23.03.1992 FR 9203453**

(43) Date de publication de la demande:
**29.09.1993 Bulletin 1993/39**

(73) Titulaire: **FRANCE TELECOM**
**75015 Paris (FR)**

(72) Inventeurs:
• **Minot, Christophe**
**F-75015 Paris (FR)**
• **Bensoussan, Marcel**
**F-92100 Boulogne (FR)**

(74) Mandataire: **Signore, Robert et al**
**c/o SOCIETE DE PROTECTION DES INVENTIONS**
**25, rue de Ponthieu**
**75008 Paris (FR)**

(56) Documents cités:
• **ELECTRONICS LETTERS. vol. 27, no. 10, 9 Mai 1991, STEVENAGE GB pages 838 - 839 ZAH ET AL '1.5um compressive-strained multiquantum-well waveguide detectors for coherent polarisation-diversified receivers'**
• **IEEE PHOTONICS TECHNOLOGY LETTERS vol. 1, no. 11, Novembre 1989, NEW YORK US pages 376 - 378 CHOA ET AL 'Optoelectronic properties of InGaAs/InGaAsP multiple-quantum-well waveguide detectors'**
• **LASER UND OPTOELEKTRONIK vol. 21, no. 5, Octobre 1989, STUTTGART DE pages 42 - 51 WEHMANN ET AL 'Integrierte Optik mit Halbleitern für die optische Nachrichtentechnik'**

## Description

La présente invention concerne un photorécepteur en onde guidée.

Elle s'applique notamment dans le domaine des télécommunications par fibres optiques et en particulier aux systèmes de communication cohérents en diversité de polarisation.

Les systèmes de transmission cohérents sur fibre optique monomode connaissent actuellement un grand développement tant pour les liaisons à grande distance que pour la distribution.

Dans une liaison cohérente, le récepteur (homodyne ou hétérodyne) permet la détection d'un signal optique incident par mélange avec une onde optique issue d'un oscillateur local qui est un laser parfaitement monochromatique.

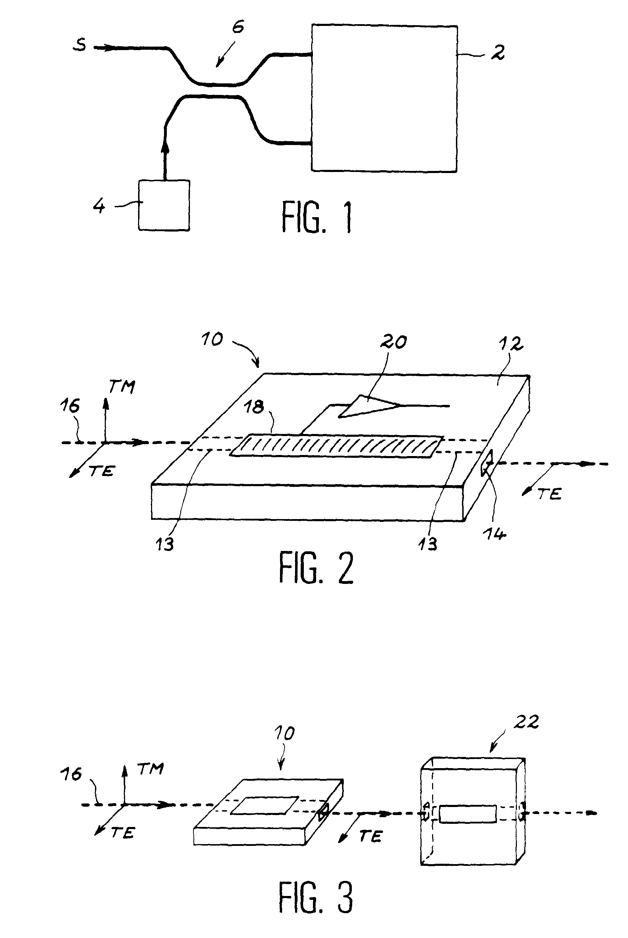

On voit sur la figure 1 le récepteur 2 ainsi qu'un coupleur optique 6 à deux entrées et deux sorties.

L'une des entrées reçoit le signal S et l'autre entrée reçoit l'onde optique issue de l'oscillateur local 4.

L'onde issue de ce dernier est mélangée au signal S grâce au coupleur 6 dont les deux sorties sont reliées au récepteur 2 pour fournir à ce dernier deux signaux optiques résultant du mélange.

L'un des points délicats d'une liaison cohérente réside dans l'impossibilité de maîtriser la polarisation optique du signal S au cours de la transmission.

Du fait des conditions d'environnement variables (température, torsion, ...) et difficilement contrôlables dans lesquelles les fibres optiques monomodes de transmission sont amenées à fonctionner, l'état de polarisation du signal S qui arrive à l'entrée du coupleur 6 fluctue de façon aléatoire.

Cela provoque des fluctuations d'amplitude dans la détection cohérente.

On est alors amené à incorporer, dans le système de réception (qui comporte le récepteur 2, l'oscillateur local 4 et le coupleur optique 6), un système de contrôle de la polarisation (non représenté sur la figure 1) que l'on place avant ou après le coupleur optique 6.

Le photorécepteur comporte des photodiodes (non représentées) qui sont respectivement munies de préamplificateurs (non représentés) en montage hybride ou intégré.

On tend plutôt à utiliser des montages hybrides de paire de photodiodes standards équilibrées.

Pour des questions évidentes de coût et de performances globales de liaison, on cherche à intégrer toutes les fonctions du système de réception (coupleur, système de contrôle de polarisation, photodiodes, préamplificateurs et même l'oscillateur local) sur un même substrat.

Mais une telle intégration pose des problèmes en particulier parce que le matériau convenant à la réalisation des photodiodes pour la longueur d'onde optique considérée n'est pas nécessairement le matériau convenant aux composants micro-électroniques tels que les préamplificateurs.

Il serait donc intéressant de trouver des solutions permettant de simplifier le système de réception tout en offrant des possibilités d'intégration micro-optoélectronique poussées avec des performances acceptables.

On connaît par l'article de ZAH et al., ELECTRONICS LETTERS VOL.27, n°10, 9 Mai 1991, p. 838-839, des photodétecteurs à multipuits quantiques pour récepteurs cohérents en diversité de polarisation. Ces photodétecteurs utilisent des transitions interbandes dans des puits quantiques en GalnAs contraint sur InP.

L'Article de WEHMANN et al, Laser und Optoelektronik, vol. 21, n° 5, Octobre 1989, p. 42-51 décrit des dispositifs d'optique intégrée réalisés avec des semiconducteurs.

La présente invention propose une structure de photorécepteur qui permet de simplifier le système de contrôle de polarisation qui est utilisé dans un système de communication cohérent.

Le photorécepteur objet de l'invention, comprenant au moins un couple composé d'un premier photodétecteur et d'un deuxième photodétecteur, est conforme à la revendication 1.

Le deuxième photodétecteur peut être de type quelconque mais, de préférence, afin d'obtenir une structure de photorécepteur adaptée à l'intégration optique, le deuxième photodétecteur est également un photodétecteur formé sur un substrat semiconducteur et comporte un ruban multicouche à multipuits quantiques de matériaux semiconducteurs, ce ruban multicouche étant prévu pour guider une lumière incidente à la fois dans le plan de la multicouche, par le jeu des indices de réfraction, et latéralement grâce à la structure de ruban.

Dans ce cas, le deuxième photodétecteur peut être placé directement à la suite du premier photodétecteur et orienté de façon que son ruban multicouche soit dans le prolongement de celui du premier photodétecteur et que les plans respectifs des multicouches constitutives soient perpendiculaires.

Il s'agit alors d'un montage hybride.

De préférence, afin d'obtenir une structure de photorécepteur encore mieux adaptée à l'intégration optique, le premier photodétecteur et le deuxième photodétecteur sont intégrés sur un même substrat semiconducteur de façon que la continuité du guidage optique soit assurée entre le ruban multicouche du premier photodétecteur et celui du deuxième photodétecteur et que les plans respectifs de ces multicouches soient parallèles et le photorécepteur comprend en outre un convertisseur de polarisation qui est réalisé sur ce même substrat également dans une structure de ruban assurant la continuité du guidage optique et compris entre le premier photodétecteur et le deuxième photodétecteur et qui est prévu pour convertir la polarisation transverse électrique de la lumière issue de ce premier photodé

tecteur en une polarisation transverse magnétique ayant une composante du champ électrique perpendiculaire au plan de la multicouche du deuxième photodétecteur, la lumière, dont la polarisation est ainsi transformée, étant injectée dans le deuxième photodétecteur où elle est absorbée.

Dans ce cas, lorsque le photorécepteur est utilisé dans un système de communication cohérent en diversité de polarisation, on peut réaliser un montage non équilibré de ce photorécepteur (comportant, pour un tel montage, deux photodétecteurs identiques).

Alors, un coupleur optique à deux entrées et deux sorties est optiquement couplé par l'une de ces sorties au premier photodétecteur ; ce coupleur permet de mélanger le signal optique incident que l'on veut détecter à l'onde optique issue d'un oscillateur local et le signal résultant du mélange est envoyé au photodétecteur, l'autre sortie du coupleur restant libre.

Dans une autre réalisation particulière, on réalise un montage équilibré : on utilise dans ce cas l'ensemble formé par le convertisseur et le couple de photodétecteurs (qui sont encore identiques dans le cas de ce montage), ainsi qu'un autre ensemble identique au précédent et formé sur le même substrat ; l'autre sortie du coupleur est alors optiquement couplée au premier photodétecteur de cet autre ensemble.

De préférence, chaque photodétecteur est formé sur un substrat en GaAs, ce qui permet de profiter des avantages de la micro-électronique développée sur GaAs.

On favorise ainsi au moindre coût l'intégration de ce photodétecteur et de composants micro-électroniques sur ce substrat ; ceci est précisé plus loin sur un exemple.

Ainsi, dans le cas du montage non équilibré, mentionné plus haut, on utilise de préférence un substrat en GaAs sur lequel on forme les deux photodétecteurs du montage et il en est de même pour le montage équilibré : les quatre photodétecteurs identiques que comporte ce montage équilibré sont de préférence réalisés sur un même substrat en GaAs.

Selon un mode de réalisation particulier du photorécepteur objet de l'invention, utilisant un convertisseur de polarisation à commande électrique, le premier photodétecteur, le convertisseur et le deuxième photodétecteur sont réalisés sur le même substrat semiconducteur, respectivement dans trois zones distinctes, à partir de couches épitaxiées qui, pour les zones des photodétecteurs, sont différentes de celles de la zone du convertisseur.

En variante, les couches épitaxiées sont des couches qui sont identiques pour les trois zones, les zones des photodétecteurs étant convenablement dopées après l'épitaxie tandis que la zone du convertisseur reste non dopée.

Selon un autre mode de réalisation particulier du photorécepteur objet de l'invention utilisant un convertisseur de polarisation passif, le premier photodétecteur, le convertisseur et le deuxième photodétecteur sont réalisés sur le même substrat semiconducteur, respectivement dans trois zones distinctes, à partir de couches épitaxiées identiques pour les deux zones des photodétecteurs, et à partir des couches diélectriques déposées pour la zone du convertisseur entre les deux photodétecteurs, ces couches assurant la continuité du guidage optique.

Le photorécepteur objet de l'invention peut comprendre deux couples comportant chacun ledit premier photodétecteur et ledit deuxième photodétecteur et prévus pour fonctionner dans un montage à deux voies équilibrées.

Enfin, un préamplificateur à entrée simple dans le cas non équilibré ou différentielle dans le cas équilibré peut être intégré sur le même substrat que le photodétecteur dont il traite le signal.

La présente invention sera mieux comprise à la lecture de la description d'exemples de réalisation donnés ci-après en faisant référence aux dessins annexés sur lesquels :

- la figure 1 est une vue schématique d'un système connu de réception pour liaison cohérente et a déjà été décrite,
- la figure 2 est une vue schématique d'un photodétecteur en onde guidée faisant partie d'un photorécepteur conforme à l'invention, éventuellement associé à un préamplificateur qui est intégré sur le même substrat que ce photodétecteur,
- la figure 3 représente schématiquement un photorécepteur conforme à l'invention qui constitue un montage croisé de deux photodétecteurs du genre de celui de la figure 2,
- la figure 4A est une vue schématique d'un photorécepteur monolithique en diversité de polarisation, à trois sections, qui est conforme à l'invention,
- la figure 4B représente schématiquement un montage non équilibré du photorécepteur de la figure 4 A ,
- la figure 4C représente schématiquement un montage équilibré utilisant quatre photodétecteurs,
- la figure 5A illustre schématiquement un courant d'obscurité dans une structure à multipuits quantiques GaAs/AlAs,
- la figure 5B illustre schématiquement un photocourant dans une telle structure,
- la figure 6 est une vue schématique de la structure d'un photodétecteur élémentaire utilisable dans la présente invention,
- la figure 7 représente la caractéristique courant-tension du photodétecteur de la figure 6, en supposant le courant d'origine purement thermo-ionique,
- la figure 8 est un schéma électrique du montage de ce photodétecteur et d'un préamplificateur, et
- les figures 9A, 9B et 10A, 10B sont des vues schématiques de photorécepteurs conformes à l'invention, comportant, sur un même substrat, deux photodétecteurs et un convertisseur de polarisation à commande électrique compris entre ces deux photodétecteurs.

Sur la figure 2, on a représenté très schématiquement un photodétecteur élémentaire en onde guidée qui est utilisable dans un photorécepteur conforme à l'invention.

Ce photodétecteur 10 est formé sur un substrat semiconducteur 12 et comporte un ruban multicouche 13 avec ses couches de confinement optique et la zone active à multipuits quantiques 14 qui permet de guider une lumière incidente 16 et d'absorber sa composante TM.

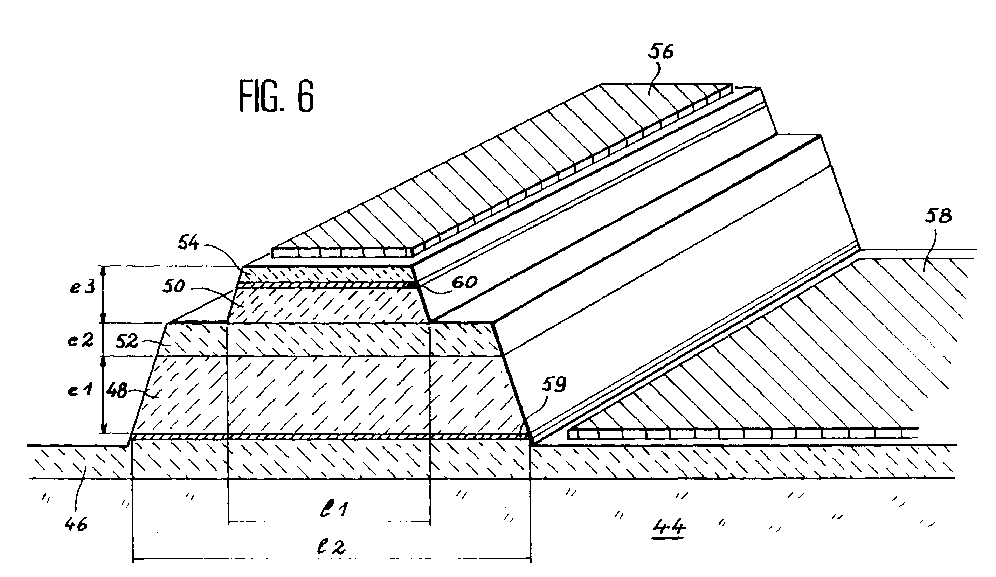

On voit aussi sur la figure 2 l'une des électrodes de commande 18 du photodétecteur 10 dont la structure sera expliquée plus en détail par la suite en faisant référence à la figure 6.

On voit aussi qu'un préamplificateur 20 des signaux électriques fournis par ce photodétecteur 10 peut également être intégré sur le substrat 12.

La lumière incidente 16 a deux composantes, à savoir une composante transverse magnétique TM dont le champ électrique possède une composante perpendiculaire au plan du ruban multicouche 13 et une composante transverse électrique TE qui est parallèle au plan de cette multicouche.

Le photodétecteur 10 comporte une structure guidante parfaitement dichroïque (à savoir le ruban multicouche 13 à multipuits quantiques 14 que l'on peut appeler plus simplement "ruban à multipuits quantiques 14"), qui absorbe de façon préférentielle la composante TM.

La composante TE qui n'est quasiment pas absorbée, est disponible à l'extrémité de sortie du ruban à multipuits quantiques 14.

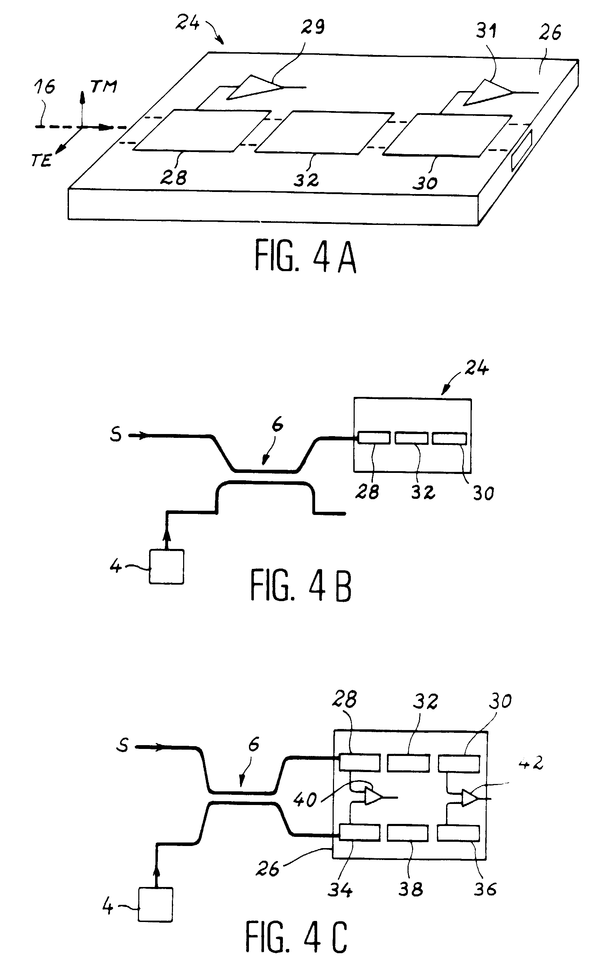

Sur la figure 3, on a représenté schématiquement un photorécepteur conforme à l'invention, comportant le photodétecteur 10 de la figure 2 ainsi qu'un autre photodétecteur 22 qui est identique à ce photodétecteur 10 et placé directement à la suite de ce dernier de façon à assurer le couplage optique des rubans multicouches.

Le montage de ces deux photodétecteurs 10 et 22 est un montage hybride qui est de plus croisé car le plan de la multicouche du photodétecteur 22 est perpendiculaire au plan de la multicouche du photodétecteur 10.

Ainsi, la composante TE qui est perpendiculaire à TM et qui ressort du photodétecteur 10 devient perpendiculaire au plan de la multicouche du photodétecteur 22 et est absorbée de façon préférentielle par ce dernier.

Sur la figure 4A, on a représenté schématiquement un autre photorécepteur 24 conforme à l'invention qui, contrairement au précédent, est monolithique.

Ce photorécepteur 24 comprend, sur un même substrat 26, deux photodétecteurs identiques 28 et 30 ainsi qu'un convertisseur de polarisation 32.

Les photodétecteurs 28 et 30 sont identiques au photodétecteur 10 de la figure 2, ces photodétecteurs 28 et 30 et le convertisseur 32 étant formés sur le substrat 26 de façon qu'une lumière incidente 16 traverse successivement le photodétecteur 28, le convertisseur 32 et le photodétecteur 30.

Comme précédemment, la composante TM de cette lumière est absorbée préférentiellement dans le photodétecteur 28, la composante TE n'est quasiment pas absorbée et arrive à l'entrée du convertisseur 32 qui est un convertisseur de polarisation TE vers TM et qui transforme ainsi la composante TE en une composante TM par application d'une tension continue appropriée si c'est un convertisseur à commande électrique, ou simplement au cours de la propagation si c'est un convertisseur passif.

Ainsi, à l'entrée du photodétecteur 30 se présente une lumière ayant une polarisation TM pour ce photodétecteur 30 et celui-ci absorbe donc cette lumière.

On voit aussi sur la figure 4A que l'on peut éventuellement réaliser sur le substrat 26 des préamplificateurs 29 et 31 prévus pour amplifier les signaux électriques respectivement fournis par les photodétecteurs 28 et 30.

La figure 4B illustre l'utilisation du photorécepteur en diversité de polarisation 24, en tant que récepteur pour liaison cohérente, dans un montage non équilibré.

On retrouve l'oscillateur local 4 et le coupleur optique 6 dont une entrée reçoit le signal optique S et l'autre entrée reçoit l'onde optique fournie par l'oscillateur local 4.

L'une des sorties du coupleur 6 est libre tandis que l'autre fournit à l'entrée du photodétecteur 28 la lumière résultant du mélange du signal S et de l'onde optique de l'oscillateur local 4.

La figure 4C illustre schématiquement un autre photorécepteur en diversité de polarisation qui est conforme à l'invention et qui comprend les photodétecteurs identiques 28 et 30 et le convertisseur 32 qui ont déjà été décrits et sont agencés de la même façon sur le substrat 26, ainsi que deux autres photodétecteurs identiques 34 et 36 et un autre convertisseur de polarisation TE vers TM 38 et qui sont formés sur le substrat 26, le photodétecteur 34, le convertisseur 38 et le photodétecteur 36 étant respectivement identiques au photodétecteur 28, au convertisseur 32 et au photodétecteur 30 et agencés de la même façon, comme on le voit sur la figure 4C.

Le photorécepteur représenté sur cette figure 4C est utilisé en tant que récepteur en montage équilibré dans une liaison cohérente.

Dans ce cas, les deux sorties du coupleur optique 3dB référencé 6 sont respectivement reliées aux entrées des photodétecteurs 28 et 34.

On voit également sur la figure 4C un amplificateur différentiel 40 dont les entrées reçoivent respectivement les signaux électriques de sortie des photodétecteurs 28 et 34 et un autre amplificateur différentiel 42 dont les entrées reçoivent respectivement les signaux électriques de sortie des photodétecteurs 30 et 36.

Les photodétecteurs et les convertisseurs de polarisation dont il a été question dans la description des figures 2, 3, 4A, 4B et 4C sont réalisés dans des couches minces et des multipuits quantiques de matériaux semiconducteurs, couches minces et multipuits quantiques qui peuvent être obtenus par n'importe quelle méthode de croissance épitaxiale fine (CBE, MBE ou MOCVD par exemple).

Les possibilités offertes par les techniques de réalisation des structures à puits quantiques à base de semiconducteurs pour la réalisation de dispositifs opto-électroniques sont maintenant bien connues.

Dans ces structures, les porteurs sont confinés dans des niveaux quantiques localisés dans les puits.

Dans la présente invention, on exploite le fait que les transitions inter-sous-bandes pour les électrons dans les puits quantiques ont des forces d'oscillateur très importantes et correspondent donc a des coefficients d'absorption élevés, avec une énergie de transition qui peut être ajustée dans une large gamme de longueur d'onde (entre 20 micromètres et 1 micromètre environ) en jouant sur l'épaisseur des puits, ou sur la composition des puits, ou sur la composition des barrières, ou sur les trois à la fois.

On utilise également le fait que ces transitions inter-sous-bandes sont fortement sélectives en polarisation et donnent une absorption dichroïque pour la lumière se propageant dans le plan des couches.

La composante TM du champ électromagnétique est fortement absorbée car son champ électrique possède une composante perpendiculaire aux couches, alors que l'autre composante TE ne l'est pas.

Il est également possible d'ajuster finement la longueur d'onde d'absorption dans ces structures, au moyen d'une tension électrique statique appliquée perpendiculairement aux couches.

On va maintenant illustrer ce qui précède en considérant un photorécepteur pour la réception d'un rayonnement dont la longueur d'onde vaut 1,55 micromètre et qui est utilisable pour des liaisons à fibres optiques monomodes ; ce photorécepteur est réalisé sur un substrat en GaAs, chaque multicouche à multipuits quantiques étant du type GaAs/AlAs et prévue pour absorber un rayonnement de longueur d'onde égale à 1,55 micromètre grâce à la transition inter-sous-bande 1 vers 4.

On ne sortirait pas du cadre de l'invention en envisageant la réception d'autres gammes de longueur d'onde au moyen du même matériau ou de tout autre combinaison de matériaux semiconducteurs.

Dans les réseaux de communication à fibres optiques connus, à 1,55 micromètres, les photorécepteurs associent un photodétecteur (photodiode à avalanche GaInAs/InP ou photodiode p-i-n de type GAInAs) à un préamplificateur (MESFET ou TEGFET GaAs) en montage hybride, car on peut alors assembler des composants qui sont optimisés indépendamment l'un de l'autre, chaque composant ayant les performances les meilleures dans sa fonction.

Cependant, l'intégration du photodétecteur et du préamplificateur, qui est souhaitable pour des raisons de coût, donne de moins bons résultats parce que les photodétecteurs à 1,55 micromètre doivent être réalisés en GaInAs sur un substrat en InP, matériaux qui ne permettent pas la réalisation d'excellents préamplificateurs intégrés.

En outre, si la réalisation de composants micro-électroniques sur le matériau InP possède de grandes potentialités, la réalisation de composants micro-électroniques sur le composant GaAs présente des avantages très généraux (grande bande interdite, bonne tenue mécanique, faible tension de vapeur, ...) qui conduisent à des composants plus fiables et moins chers.

Dans la présente invention, on réalise des photodétecteurs à 1,55 micromètres sur un substrat en GaAs, ce qui permet de réaliser un photorécepteur intégré utilisant pour l'amplification tous les avantages des composants micro-électroniques formés sur un tel substrat en GaAs.

On a alors une solution autant performante mais moins coûteuse que la solution hybride mentionnée plus haut.

La bande interdite de GaAs à température ambiante (0,87 micromètre) ne permet pas d'utiliser les transitions bande à bande à 1,55 micromètre.

Dans la présente invention on utilise les transitions inter-sous-bandes dans une structure à multipuits quantiques GaAs/AlAs.

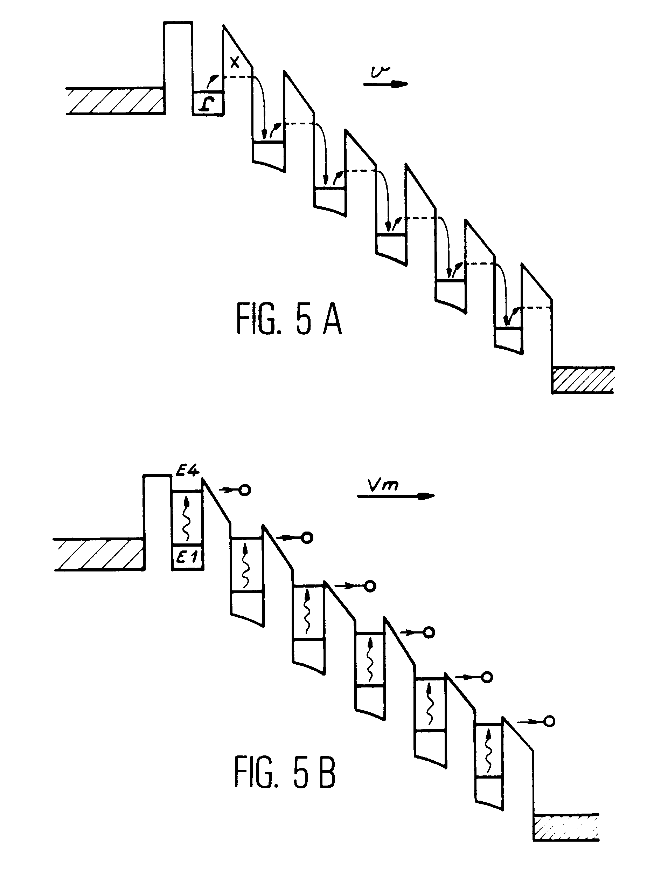

On rappelle que le rayonnement amène les électrons, qui sont présents par dopage dans les puits en GaAs, dans les niveaux de hautes énergies proches du "continuum" d'états au-dessus des barrières AlAs (voir la figure 5B).

Ces électrons transitent dans le continuum par effet tunnel à travers la barrière (qui a une forme triangulaire sous champ électrique).

Là, ils donnent naissance à un photocourant à condition que leur vitesse moyenne Vm dans le continuum soit nettement supérieure à la vitesse v des électrons du courant d'obscurité (figure 5A).

Le décalage ("offset") de bande de conduction entre GaAs et AlAs au voisinage du minimum gamma (noté avec la lettre grecque habituelle sur la figure 5A) est de l'ordre de 1eV.

Dans une structure à multipuits quantiques GaAs/AlAs, l'énergie séparant les niveaux 1 et 2 varie avec la largeur du puits (GaAs) entre 0, lorsque cette largeur tend vers l'infini, et 0,665 eV, lorsque cette largeur $a$ est égale à 2 nm.

Ceci est insuffisant pour atteindre 1,55 micromètre (0,8 eV) et seules les transitions entre le niveau 1 et un niveau supérieur à 2 le permettent.

On élimine les transitions du niveau 1 vers le niveau 3 qui sont interdites en champ nul dans le puits quantique isolé.

Pour des puits dont l'épaisseur est de l'ordre de 6,7 nm, la séparation entre les niveaux 1 et 4 atteint une valeur convenable (sur la figure 5B, E1 et E4 représentent respectivement les énergies de ces niveaux 1 et 4).

De plus le niveau 4 est voisin du continuum des états situés au-dessus des barrières en AlAs, ce qui est favorable au passage vers ces états.

Pour compenser la faiblesse du coefficient d'absorption correspondant à la transition 1 vers 4, par rapport à celui qui correspond à la transition 1 vers 2, on utilise une propagation guidée, une épaisseur importante de matériau étant ainsi traversée.

La structure d'un photodétecteur utilisable dans la présente invention est schématiquement représentée sur la figure 6.

A titre purement indicatif mais nullement limitatif, le guide optique (ruban multicouche à multipuits quantiques que comporte cette structure) a une longueur de l'ordre de 200 micromètres, ce qui conduit à une bonne absorption de la lumière incidente.

Dans l'exemple de la figure 6, le photodétecteur utilisable dans l'invention comprend, sur un substrat 44 en GaAs semi-isolant, une couche de contact 46 en GaAs dopé n+ sur laquelle on trouve deux couches de confinement 48 et 50 en AlAs dopé n+ et, entre celles-ci, une couche à multipuits quantique 52 qui est une alternance de couches en GaAs dopé n et de couches en $Ga_{1-x}Al_xAs$ (par exemple AlAs) dopé n.

Une couche de contact 54 en GaAs dopé n+ surmonte la couche 50 et une électrode formée par une couche 56 en AuGeNi surmonte la couche 54.

Comme on le voit sur la figure 6, l'empilement des couches 48 à 56 forme un mesa sur la couche de contact 46 et, à côté de ce mesa, une autre électrode 58 en AuGeNi est formée sur la couche de contact 46.

Les électrodes 56 et 58 forment les prises de contact.

A titre purement indicatif et nullement limitatif, n est de l'ordre de $10^{18}$ cm$^{-3}$ , n+ est de l'ordre de $2 \times 10^{18}$ cm$^{-3}$, la largeur l1 de la couche 50 est, à la base de celle-ci, égale à 2 micromètres, la largeur l2 de la couche 48 est, à la base de celle-ci, égale à 5 micromètres et les hauteurs respectives e1, e2 et e3 des couches 48, 52 et 50 sont respectivement égales à 2 micromètres, 0,8 micromètre et 1 micromètre.

La lumière incidente est guidée par la couche 52 qui absorbe la composante TM de cette lumière.

Afin d'éviter les hétérojonctions abruptes, une couche de transition 59 peut être prévue entre la couche de contact 46 et la couche de confinement 48 et une autre couche de transition 60 peut être prévue entre la couche de confinement 50 et la couche de contact 54.

Chacune de ces couches de transition peut être une couche en $Ga_{1-x}Al_x As$ dont la teneur x en aluminium varie progressivement de 0 du côté de GaAs à 1 du côté de AlAs.

En variante, chaque couche de transition est une alternance de couches de GaAs et AlAs, l'épaisseur de ces couches de GaAs allant en augmentant depuis la couche de confinement correspondante jusqu'à la couche de contact correspondante tandis que l'épaisseur des couches de AlAs va en diminuant lorsqu'on va de la couche de confinement à la couche de contact.

La différence des indices optiques entre la couche à multipuits quantiques 52 et les couches de confinement (différence de l'ordre de 0,2) est suffisante pour obtenir un bon recouvrement entre le mode optique et la zone absorbante.

Le confinement latéral est obtenu par une structure ruban réalisée dans une technologie de mesa mais d'autres solutions, telles que la reprise d'épitaxie, le désordre d'alliage induit ou l'implantation par exemple, pourraient être utilisées pour ce faire ; ces modes de réalisation sont donnés à titre purement indicatif et nullement limitatif.

Pour réaliser une bonne épitaxie des couches des multipuits quantiques et un dopage efficace des couches de confinement, il peut être avantageux d'améliorer la qualité des couches de confinement en AlAs en y insérant périodiquement des "puits" en GaAs (par exemple une couche en GaAs de 5 nm d'épaisseur tout les 50 nm), d'autant plus que la couche de confinement inférieure doit être épaisse pour bien isoler la couche guidante du substrat dont l'indice optique est plus grand.

On notera que la structure en ondes guidées du photodétecteur présente l'avantage d'intégrer deux fonctions qui sont en général assignées à des dispositifs différents, à savoir les fonctions d'interconnexion optique et de détection ; ceci est bien illustré dans le cas du photorécepteur équilibré (fig.4C) : dans le cas de l'invention, il n'y a besoin que de deux ports d'entrée, alors que classiquement il faut quatre ports d'entrée.

Le courant d'obscurité provient de la dérive des électrons peuplant les puits sous le champ appliqué par transferts successifs entre les états gamma et les états X.

Avec des barrières b assez larges (b>10 nm), les contributions des courants de conduction par effet tunnel séquentiel et par sauts (hopping) peuvent être considérablement réduites.

A température ambiante et à basse tension, c'est alors le courant d'émission thermo-ionique qui domine.

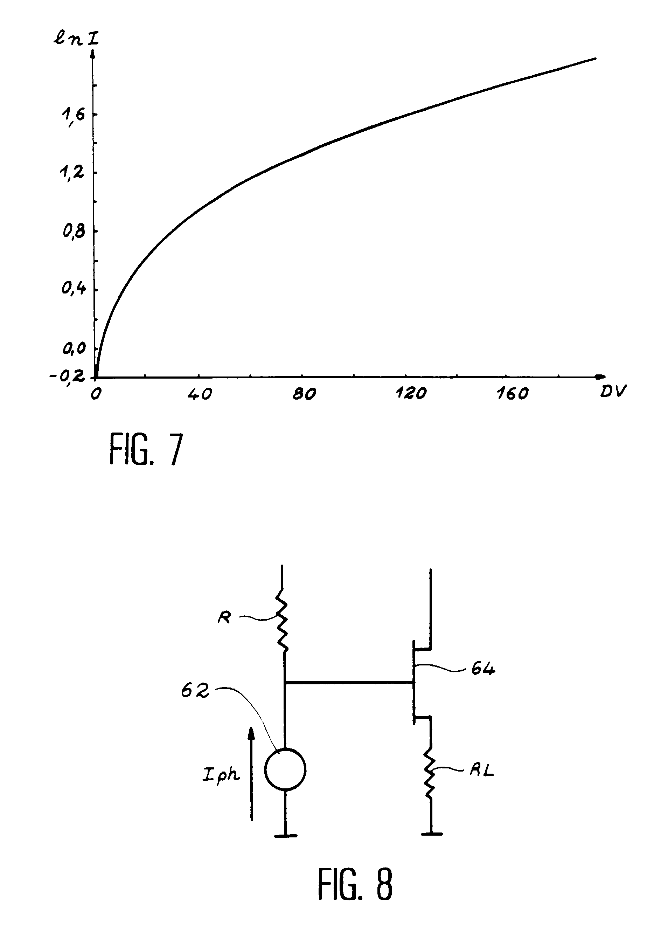

La figure 7 donne la caractéristique courant-tension obtenue (lnI, où I est l'intensité du courant exprimée en A/cm$^2$, en fonction de la chute de tension DV exprimée en mV), le courant étant supposé d'origine purement thermo-ionique.

Pour une tension de polarisation de 40 mV par période (environ 2V pour un micromètre) et une surface de l'ordre de $10^{-5}$ cm$^2$ on peut obtenir un courant d'obscurité de 100 micro-ampères.

On peut envisager de réduire ce courant d'obscurité en multipliant le nombre d'interfaces où se produit le couplage gamma-X, par exemple en insérant des puits minces en GaAs dans les barrières en AlAs.

La figure 8 donne à titre indicatif un schéma électrique du photodétecteur de la figure 6, référencé 62 sur cette figure 8, associé à un transistor préamplificateur à effet de champ référencé 64.

Ce schéma fait apparaître la résistance de charge R du photodétecteur qui est aussi la résistance de polarisation de la grille du transistor 64, ainsi que la résistance de charge RL du transistor, en montage drain commun ; Iph représente le photocourant.

Les valeurs de RL sont à ajuster en fonction des caractéristiques du photodétecteur et du transistor, de façon à fixer la tension de grille et la tension drain-source.

Un courant d'obscurité de 100 microampères limite la valeur de R à quelques dizaines de kiloohms.

La puissance minimum détectable avec ce photodétecteur 62 est considérablement plus élevée que dans les détecteurs classiques à faible courant d'obscurité ; ceci n'est pas trop gênant en détection cohérente car l'oscillateur local délivre une puissance optique importante.

On décrit ci-après des modes de réalisation particuliers du photorécepteur objet de l'invention, qui comprennent successivement un photodétecteur en mode TM, un convertisseur de polarisation TE-TM à commande électrique et un second photodétecteur en mode TM.

Une telle configuration présente l'avantage de simplifier la conception du photorécepteur en détection cohérente car la polarisation du signal peut être quelconque.

En fixant la polarisation de l'oscillateur local à 45°, on mesure la composante TM dans le premier photodétecteur, les composantes TE du signal et de l'oscillateur local sont transmises au convertisseur de polarisation et leur détection s'effectue en mode TM dans le second photodétecteur (voir la figure 4B).

On ne décrit pas en détail le convertisseur TE-TM.

On rappelle que le convertisseur à commande électrique est une structure guidante (en GaAs ou autres matériaux) avec des couches de confinement assurant le guidage dans le plan et avec une configuration ruban assurant le guidage latéral, cette structure étant orientée selon l'axe <110> (sur un substrat en GaAs <001> semi-isolant).

Un champ électrique dans le plan de cette structure (selon $<1\overline{1}0>$) induit une biréfringence par effet électro-optique.

La biréfringence modale doit être compensée par une configuration de champ électrique alternativement dans un sens puis dans l'autre, avec une périodicité précise (convertisseur à delta-beta alterné).

Ce champ électrique est obtenu par une alternance de contacts p et n (diffusés ou implantés) autour du guide d'onde et se répartit dans les zones i des structures planar p-i-n ainsi formées.

Il est aussi possible de réaliser des convertisseurs de polarisation sur un substrat orienté <110>.

Comme la réalisation des photodétecteurs à multipuits quantiques est indépendante de l'orientation du substrat, pourvu que la croissance épitaxiale soit maîtrisée selon l'orientation choisie, l'ensemble convertisseur et photodétecteurs peut être réalisé sur le même substrat quelle que soit l'orientation.

Un problème se pose du fait de la différence de nature entre les couches des photodétecteurs qui doivent être dopées, et les couches du convertisseur de polarisation dans lesquelles les densités de porteurs libres doivent rester négligeables pour éviter les pertes.

Pour résoudre ce problème, on peut procéder de deux façons différentes :

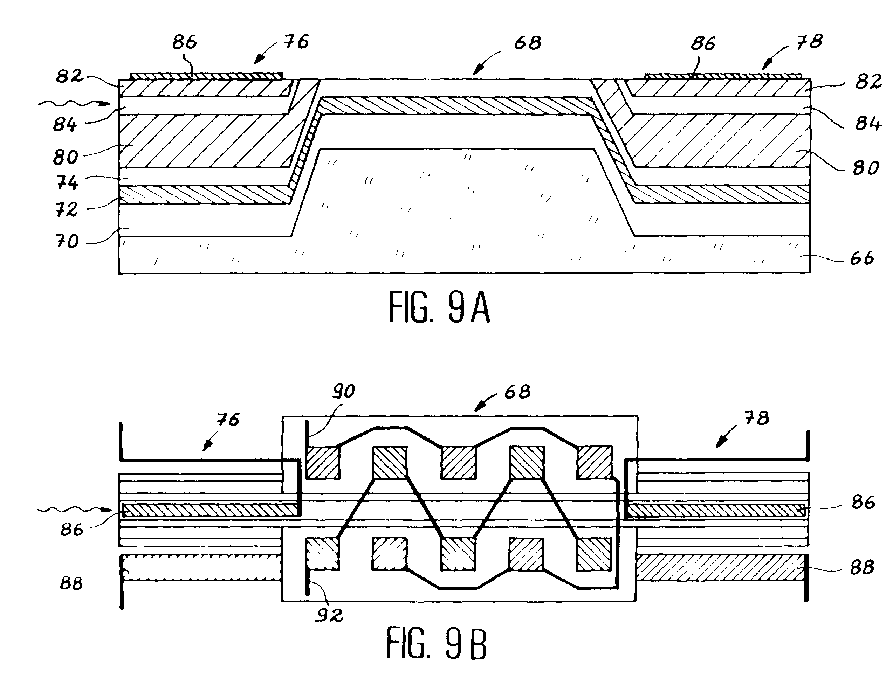

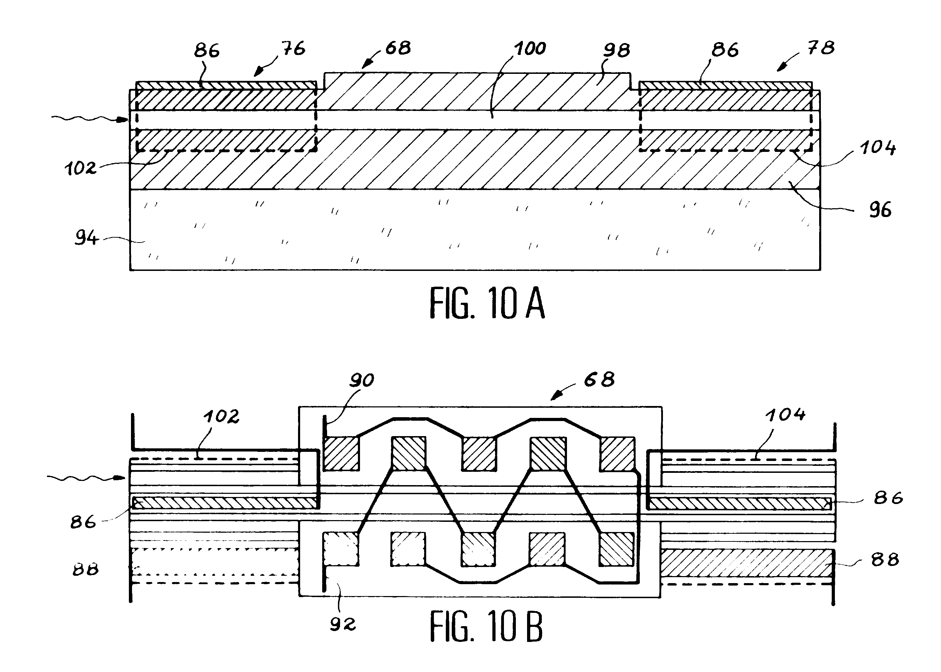

- la première façon consiste à réaliser par épitaxie deux ensembles de couches différents, l'un pour les sections de photodétection et l'autre pour la section de conversion TE-TM (figures 9A et 9B),
- la deuxième façon consiste à utiliser les mêmes couches non dopées dans les trois sections et à modifier après coup le dopage des sections de photodétection (figures 10A et 10B).

La seconde façon présente l'avantage de simplifier le couplage optique entre les éléments.

On explique ci-après plus en détail la première façon de procéder (intégration de photodétecteurs et d'un convertisseur qui sont indépendants).

Plusieurs configurations sont ici possibles, selon la nature du couplage optique mis en oeuvre entre les différents composants.

Avec des photodétecteurs du genre de celui de la figure 6, on utilise un convertisseur en GaAs avec des couches de confinement en GaAlAs ou faites de multipuits quantiques GaAs/AlAs.

Une première configuration utilise une reprise d'épitaxie :

- on épitaxie d'abord un premier ensemble de couches, par exemple celles des photodétecteurs,
- on les enlève ensuite par tout procédé d'attaque à l'emplacement où doit venir s'insérer le convertisseur,
- puis on épitaxie les couches de ce convertisseur.

Les étapes ultérieures de technologie sont prévues pour enlever les couches qui recouvrent alors les photodétecteurs afin de permettre la réalisation des contacts et pour réaliser le ruban.

Une deuxième configuration utilise un couplage en bout.

Cette deuxième configuration est celle qui est illustrée sur la figure 9A, qui est une vue en coupe longitudinale du photorécepteur à trois sections, et sur la figure 9B, qui est une vue de dessus de ce photorécepteur.

Cette méthode de couplage en bout ressemble à la méthode précédente de reprise d'épitaxie mais on part d'un substrat déjà gravé de façon à rattraper les différences de niveau entre les photodétecteurs et le convertisseur et à éviter la reprise d'épitaxie.

On épitaxie alors en une seule fois toutes les couches, en commençant par celles du convertisseur qui préservent mieux la qualité cristalline.

Les couches guidantes des différentes sections se retrouvent face à face ("butt coupling") comme on le voit sur les figures 9A et 9B.

On enlève ensuite les couches qui recouvrent le convertisseur pour pouvoir réaliser les contacts de celui-ci.

En revenant à ces figures 9A et 9B, on voit sur la figure 9A le substrat 66 en GaAs semi-isolant qui est préalablement préparé de façon à présenter une surélévation au niveau du convertisseur 68.

Sur ce substrat sont successivement empilées une couche de confinement 70 à multipuits quantiques GaAs/AlAs, une couche de guidage 72 en GaAs et une autre couche de confinement 74 à multipuits quantiques GaAs/AlAs.

Chacun des photodétecteurs 76 et 78 qui sont situés de part et d'autre du convertisseur, comprend, sur la couche de confinement 74, deux couches de confinement 80 et 82 en AlAs dopé n+ et, entre celles-ci, une couche 84 à multipuits quantiques (homologue de la couche 52 de la figure 6).

Les couches de contact en GaAs dopé, destinées à faciliter les contacts ohmiques sur AlAs, ne sont pas représentées.

On voit sur la figure 9B les électrodes 86 et 88 de chaque photodétecteur et les contacts n, référencés 90, ainsi que les contacts p, référencés 92, du convertisseur.

Une troisième configuration utilise des interconnexions :

On épitaxie ici aussi toutes les couches en une seule fois.

On enlève ensuite les couches qui recouvrent le convertisseur et l'on délimite chacun des composants.

Dans l'étape suivante, on dépose un matériau de faible indice (par exemple la silice) qui est ensuite gravé pour obtenir des guides d'onde réalisant des interconnexions optiques entre le convertisseur et les photodétecteurs selon des techniques développées en optique intégrée ("tapered coupling" par exemple).

On revient maintenant sur la seconde façon de procéder (intégration complète des photodétecteurs et du convertisseur de polarisation).

En partant d'un empilement de couches correspondant à la structure du photodétecteur mais non dopées, on peut réaliser un convertisseur TE-TM dont la couche active est la couche à multipuits quantiques.

Le faisceau lumineux peut ainsi se propager dans les trois sections du composant sans rencontrer de discontinuité (figure 10A et 10B).

Le problème est de doper la section de photodétection après épitaxie.

La meilleure solution consiste à implanter un dopant (Si) par implantation ionique dans la zone où se propage le mode TM.

Il faut faire attention à rester en deçà d'un dopage d'environ $10^{18}$ cm$^{-3}$, car une dose d'implantation trop élevée favorise l'interdiffusion du Gallium et de l'Aluminium dans la couche à multipuits quantiques et ramène celle-ci à l'état d'alliage (cette dernière propriété peut d'ailleurs être éventuellement mise à profit pour réaliser le confinement latéral du guide d'onde, en remplacement du guidage par mesa, mais avec des différences d'indice nettement plus faibles ; l'avantage est d'atteindre une technologie planar tout implanté).

Pour obtenir un dopage uniforme de la couche à multipuits quantiques à travers AlAs, il est préférable de diminuer l'épaisseur de la couche de confinement supérieure.

Cet inconvénient doit pouvoir être toléré compte tenu de la faible longueur du photodétecteur (de l'ordre de 200 micromètres par exemple) et de l'effet confinant du dépôt métallique du contact supérieur.

L'implantation doit d'autre part s'opérer suffisamment profondément et sur une surface assez large pour que l'on puisse prendre le contact inférieur.

En revenant aux figures 10A et 10B, on voit sur la figure 10A le substrat 94 en GaAs semi-isolant, qui est surmonté par les couches de confinement 96 et 98 en AlAs entre lesquelles se trouve la couche à multipuits quantiques 100 en GaAs/AlAs.

Les couches de contact ne sont pas non plus représentées.

Les couches 96, 98 et 100 sont non dopées au niveau du convertisseur de polarisation 68 mais sont dopées par implantation de silicium au niveau des photodétecteurs 76 et 78.

Les zones dopées par implantation sont délimitées par des pointillés sur les figures 1CA et 10B et portent les références 102 et 104.

## Revendications

1. Photorécepteur, comprenant au moins un couple composé d'un premier photodétecteur (10, 28, 34, 76) et d'un deuxième photodétecteur (22, 30, 36, 78), le premier photodétecteur étant formé sur un substrat semiconducteur (12, 26, 44, 66, 94) et comportant un ruban multicouche à multipuits quantiques de matériaux semiconducteurs (14, 52, 84, 100), ce ruban multicouche étant prévu pour guider une lumière incidente (16), caractérisé en ce que le deuxième photodétecteur est placé après le premier photodétecteur et en ce que le premier photodétecteur est apte à absorber sélectivement la composante transverse magnétique (TM) de cette lumiere, dont le champ électrique possède une composante perpendiculaire au plan de la multicouche, la composante transverse électrique (TE) de cette lumière n'étant quasiment pas absorbée dans le premier photodétecteur, le deuxième photodétecteur étant prévu pour absorber cette composante transverse électrique et en ce que le ruban multicouche est en outre prévu pour absorber ladite lumière incidente au moyen d'une transition intrabande entre deux sous-bandes.

2. Photorécepteur selon la revendication 1, caractérisé en ce que le deuxième photodétecteur (22, 30, 36, 78) est également formé sur un substrat semiconducteur (26, 66, 94) et comporte un ruban multicouche à multipuits quantiques de matériaux semiconducteurs (84, 100), ce ruban multicouche étant prévu pour guider une lumière incidente.

3. Photorécepteur selon la revendication 2, caractérisé en ce que le montage des premier et deuxième photodétecteurs est hybride et en ce que le deuxième photodétecteur (22) est placé directement à la suite du premier photodétecteur (10) et orienté de façon que son ruban multicouche soit dans le prolongement de celui du premier photodétecteur et que les plans respectifs des multicouches constitutives soient perpendiculaires.

4. Photorécepteur selon la revendication 2, caractérisé en ce que le premier photodétecteur (28, 34, 76) et le deuxième photodétecteur (30, 36, 78) sont intégrés sur un même substrat (26, 66, 94) semiconducteur de façon que la continuité du guidage optique soit assurée entre le ruban multicouche du premier photodétecteur et celui du deuxième photodétecteur et que les plans respectifs de ces multicouches soient parallèles et en ce que le photorécepteur comprend en outre un convertisseur de polarisation (32, 38, 68) qui est réalisé sur ce même substrat également dans une structure ruban assurant la continuité du guidage optique et compris entre le premier photodétecteur et le deuxième photodétecteur et qui est prévu pour convertir la polarisation transverse électrique de la lumière issue de ce premier photodétecteur en une polarisation transverse magnétique ayant une composante du champ électrique perpendiculaire au plan de la multicouche du deuxième photodétecteur, la lumière, dont la polarisation est ainsi transformée, étant injectée dans le deuxième photodétecteur où elle est absorbée.

5. Photorécepteur selon l'une quelconque des revendications 1 à 4, caractérisé en ce que chaque photodétecteur est formé sur un substrat (66, 94) en GaAs.

6. Photorécepteur selon la revendication 5, caractérisé en ce que chaque multicouche à multipuits quantiques (84, 100) est du type GaAs/AlAs et prévue pour absorber un rayonnement de longueur d'onde égale à 1,55 micromètre grâce à la transition intersous-bande 1 vers 4.

7. Photorécepteur selon la revendication 4, caractérisé en ce que le convertisseur (68) est à commande électrique, le premier photodétecteur (76), le convertisseur (68) et le deuxième photodétecteur (78) étant réalisés sur le substrat (66), respectivement dans trois zones distinctes, à partir de couches épitaxiées qui, pour les zones des photodétecteurs, sont différentes de celles de la zone du convertisseur.

8. Photorécepteur selon la revendication 4, caractérisé en ce que le convertisseur est passif, le premier photodétecteur (28, 34), le convertisseur (32, 38) et le deuxième photodétecteur (30, 36) étant réalisés sur le substrat (26), respectivement dans trois zones distinctes, à partir de couches épitaxiées identiques pour les zones des photodétecteurs, à partir de couches diélectriques déposées pour le convertisseur.

9. Photorécepteur selon la revendication 4, caractérisé en ce que le convertisseur (68) est à commande électrique, le premier photodétecteur (76), le convertisseur (68) et le deuxième photodétecteur (66) étant réalisés sur le substrat (94), respectivement dans trois zones distinctes, à partir de couches épitaxiées qui sont identiques pour les trois zones, les zones des photodétecteurs étant convenablement dopées tandis que la zone du convertisseur est non dopée.

10. Photorécepteur selon l'une quelconque des revendications 1 à 9, caractérisé en ce que chaque photodétecteur qui est intégré sur un substrat est associé à un préamplificateur (20, 29, 31, 64) qui traite le signal fourni par ce photodétecteur et qui est intégré sur le même substrat que ce photodétecteur.

11. Photodétecteur selon l'une quelconque des revendications 1 à 9, caractérisé en ce qu'il comprend deux couples comportant chacun ledit premier photodétecteur et ledit deuxième photodétecteur et prévus pour fonctionner dans un montage à deux voies équilibrées.

12. Photorécepteur selon la revendication 11, caractérisé en ce que les photodétecteurs sont intégrés sur un même substrat, en ce que les premiers photodétecteurs sont associés à un préamplificateur (40) à entrée différentielle qui traite les signaux fournis par ces premiers photodétecteurs, en ce que les deuxièmes photodétecteurs sont associés à un préamplificateur (42) à entrée différentielle qui traite les signaux fournis par ces deuxièmes photodétecteurs et en ce que les préamplificateurs sont intégrés sur le même substrat que les photodétecteurs.

## Claims

1. Photoreceptor, comprising at least one pair constituted by a first photodetector (10, 28, 34, 76) and a second photodetector (22, 30, 36, 78), the first photodetector being formed on a semiconductor substrate (12, 26, 44, 66, 94) and having a multilayer ribbon of multiple quantum wells made from semiconductor materials (14, 52, 84, 100), said multilayer ribbon serving to guide incident light (16), characterized in that the second photodetector is placed following the first photodetector and in that the first photodetector is able to selectively absorb the transverse magnetic component (TM) of said light, whose electrical field has a component perpendicular to the plane of the multilayer, the transverse electrical component (TE) of said light being virtually not absorbed in the first photodetector, the second photodetector serving to absorb said transverse electrical component and in that the multilayer ribbon is also provided for absorbing said incident light by means of an intraband transition between the two subbands.

2. Photoreceptor according to claim 1, characterized in that the second photoreceptor (22, 30, 36, 78) is also formed on a semiconductor substrate (26, 66, 94) and has a multilayer ribbon with multiple quantum wells made of semiconductor materials (84, 100), said multilayer ribbon being provided to guide an incident light.

3. Photoreceptor according to claim 2, characterized in that the arrangement of the first and second photodetectors is hybrid and the second photodetector (22) is placed directly after the first photodetector (10) and oriented so that its multilayer ribbon is in the extension of that of the first photodetector and the respective planes of the constituent multilayers are perpendicular.

4. Photoreceptor according to claim 2, characterized in that the first photodetector (28, 34, 76) and the second photodetector (30, 36, 78) are integrated on the same semiconductor substrate (26, 66, 94) so that continuity in the optical guidance is ensured between the multilayer ribbon of the first photodetector and that of the second photodetector, and the respective planes of these multilayers are parallel, and that the photoreceptor also has a polarization converter (32, 38, 68) which is formed on this same substrate in a ribbon structure as well, ensuring continuity in the optical guidance and is between the first photodetector and the second photodetector, which is provided to convert the transverse electrical polarization of the light coming from this first photodetector into a transverse magnetic polarization having a component of the electrical field perpendicular to the plane of the multilayer of the second photodetector, the light, whose polarization is thus transformed, is injected into the second photodetector where it is absorbed.

5. Photoreceptor according to any one of the claims 1 to 4, characterized in that each photodetector is formed on a substrate (66, 94) made of GaAs.

6. Photoreceptor according to claim 5, characterized in that each multilayer with multiple quantum wells (84, 100) is of the GaAs/AlAs type and is provided to absorb radiation with a wavelength equal to 1.55 micrometres through the inter-subband transition 1 to 4.

7. Photoreceptor according to claim 4, characterized in that the converter (68) is electrically controlled, with the first photodetector (76), the converter (68) and the second photodetector (78) formed on the substrate (66) in three distinct zones, respectively, from epitaxied layers which, for the zones of the photodetectors, are different from those of the converter zone.

8. Photoreceptor according to claim 4, characterized in that the converter is passive, and the first photodetector (28, 34), the converter (32, 38) and the second photodetector (30, 36) are formed on the substrate (26), respectively in three distinct zones, from identical epitaxied layers for the zones of the photodetectors, from dielectric layers deposited for the converter.

9. Photoreceptor according to claim 4, characterized in that the converter (68) is electrically controlled, and the first photodetector (76), the converter (68) and the second photodetector (66) are formed on the substrate (94), respectively in three distinct zones, from epitaxied layers which are identical for the three zones, with the zones of the photodetectors suitably doped, while the zone of the converter is not doped.

10. Photoreceptor according to any one of the claims 1 to 9, characterized in that each photodetector which is integrated on a substrate is combined with a preamplifier (20, 29, 31, 64) which processes the signal supplied by this photodetector and which is integrated on the same substrate as the photodetector.

11. Photoreceptor according to any one of the claims 1 to 9, characterized in that it consists of two pairs, each having said first photodetector and said second photodetector and it functions in a two-way equilibrated mounting.

12. Photoreceptor according to claim 11, characterized in that the photodetectors are integrated on the same substrate, that the first photodetectors are combined with a differential input preamplifier (40) which processes the signals supplied by these first photodetectors, that the second photodetectors are combined with a differential input preamplifier (42) which processes the signals supplied by those two photodetectors, and that the preamplifiers are integrated on the same substrate as the photodetectors.

**Patentansprüche**

1. Photoempfänger mit wenigstens einem durch einen ersten Photodetektor (10, 28, 34, 76) und einen zweiten Photodetektor (22, 30, 36, 78) gebildeten Paar, wobei der erste Photodetektor auf einem Halbleitersubstrat (12, 26, 44, 66, 94) ausgebildet ist und einen Mehrschichtenstreifen mit mehrfachen Quantenbrunnen aus Halbleitermaterial (14, 52, 84, 100) umfaßt und dieser Mehrschichtenstreifen vorgesehen ist, ein einfallendes Licht (16) zu leiten,

   **dadurch gekennzeichnet**,

   daß der zweite Photodetektor dem nach dem ersten Photodetektor angeordnet ist und daß der erste Photodetektor fähig ist, selektiv die magnetische Transversalkomponente (TM) dieses Lichts zu absorbieren, dessen elektrisches Feld eine zur Ebene des Mehrschichtenstreifens senkrechte Komponente besitzt, wobei die elektrische Transversalkomponente (TE) dieses Lichts im ersten photodetektor quasi nicht absorbiert wird, sondern der zweite photodetektor dazu bestimmt ist, diese elektrische Transversalkomponente zu absorbieren, und dadurch, daß der Mehrschichtenstreifen außerdem vorgesehen ist, das genannte einfallende Licht mittels eines Übergangs zwischen zwei Teilstreifen innerhalb des Mehrschichtenstreifens zu absorbieren.

2. Photoempfänger nach Anspruch 1, dadurch gekennzeichnet, daß der zweite Photodetektor (22, 30, 36, 78) ebenfalls auf einem Halbleitersubstrat (26, 66, 94) ausgebildet ist und einen Mehrschichtenstreifen mit mehrfachem Quantenbrunnen aus Halbleitermaterial (84, 100) umfaßt, wobei dieser Mehrschichtenstreifen vorgesehen ist, ein einfallendes Licht zu leiten.

3. Photoempfänger nach Anspruch 2, dadurch gekennzeichnet, daß die Anordnung aus erstem und zweitem Photodetektor hybrid ist und daß der zweite Photodetektor (22) direkt nach dem ersten Photodetektor (10) angeordnet und so ausgerichtet ist, daß sein Mehrschichtenstreifen sich in der Verlängerung von dem des ersten Photodetektors befindet und die jeweiligen Ebenen der Mehrschichtenstreifen senkrecht zueinander sind.

4. Photoempfänger nach Anspruch 2, dadurch gekennzeichnet, daß der erste Photodetektor (28, 34, 76) und der zweite Photodetektor (30, 36, 78) auf demselben Halbleiter-Substrat (26, 66, 94) integriert sind, so daß die Kontinuität der optischen Leitung zwischen dem Mehrschichtenstreifen des ersten Photodetektors und demjenigen des zweiten Photodetektors sichergestellt ist und die jeweiligen Ebenen dieser Mehrschichtenstreifen parallel sind, und dadurch, daß der Photoempfänger außerdem einen Polarisationskonverter bzw. -wandler (32, 38, 68) umfaßt, hergestellt auf diesem selben Substrat, ebenfalls in einer die Kontinuität der Lichtleitung sicherstellenden Streifenstruktur und zwischen dem ersten Photodetektor und dem zweiten Photodetektor enthalten und vorgesehen, die elektrische Transversalpolarisation des aus diesem Photodetektor austretenden Lichts umzuwandeln in eine magnetische Transversalpolarisation mit einer zur Ebene des Mehrschichtenstreifens des zweiten Photodetektors senkrechten Komponente des elektrischen Feldes, wobei das Licht, dessen Polarisation derart konvertiert bzw. umgewandelt ist, in den zweiten Photodetektor eingespeist wird, wo es absorbiert wird.

5. Photoempfänger nach einem der Ansprüche 1 bis 4, dadurch gekennzeichnet, daß jeder Photodetektor auf einem GaAS-Substrat (66, 94) ausgebildet ist.

6. Photoempfänger nach Anspruch 5, dadurch gekennzeichnet, daß jeder Mehrschichtenstreifen mit mehrfachen Quantenbrunnen (84, 100) vom Typ GaAs/AlAs ist und vorgesehen ist, eine Strahlung mit einer Wellenlänge gleich 1,55μm zu absorbieren dank des Übergangs zwischen Teilstreifen 1 nach 4.

7. Photoempfänger nach Anspruch 4, dadurch gekennzeichnet, daß der Konverter bzw. Wandler (68) elektrisch gesteuert wird, wobei der erste Photodetektor (76), der Wandler (68) und der zweite Photodetektor (78) auf dem Substrat (66) realisiert sind, jeweils in drei verschiedenen Zonen und aus Epitaxieschichten, die für die Zonen der Photodetektoren anders sind als für die Zone des Konverters bzw. Wandlers.

8.  Photoempfänger nach Anspruch 4, dadurch gekennzeichnet, daß der Konverter bzw. Wandler passiv ist, wobei der erste Photodetektor (28, 34), der Wandler (32, 38) und der zweite Photodetektor (30, 36) auf dem Substrat (26) realisiert sind, jeweils in drei verschiedenen Zonen, aus identischen Epitaxieschichten für die Photodetektoren-Zone und aus abgeschiedenen dielektrischen Schichten für den Wandler.

9.  Photoempfänger nach Anspruch 4, dadurch gekennzeichnet, daß der Konverter bzw. Wandler (68) elektrisch gesteuert wird, wobei der erste Photodetektor (76), der Wandler (68) und der zweite Photodetektor (66) auf dem Substrat (94) realisiert sind, jeweils in drei verschiedenen Zonen und aus Epitaxieschichten, die für die drei Zonen identisch sind, wobei die Photodetektoren-Zonen passend dotiert sind, während die Wandler-Zone nicht dotiert ist.

10. Photoempfänger nach einem der Ansprüche 1 bis 9, dadurch gekennzeichnet, daß jeder Photodetektor, der auf einem Substrat integriert ist, mit einem Vorverstärker (20, 29, 31, 64) verbunden ist, der das durch diesen Photodetektor gelieferte Signal verarbeitet und der auf demselben Substrat wie der Photodetektor integriert ist.

11. Photoempfänger nach einem der Ansprüche 1 bis 9, dadurch gekennzeichnet, daß er zwei Paare umfaßt, jedes den genannten ersten Photodetektor und den genannten zweiten Photodetektor umfassend und vorgesehen, in einer Anordnung mit zwei ausgeglichenen Kanälen zu arbeiten.

12. Photoempfänger nach Anspruch 11, dadurch gekennzeichnet, daß die Photodetektoren auf demselben Substrat integriert sind und daß die ersten Photodetektoren mit einem Vorverstärker (40) mit Differentialeingang verbunden sind, der die durch diese ersten Photodetektoren gelieferten Signale verarbeitet, und dadurch, daß die zweiten Photodetektoren mit einem Vorverstärker (42) mit Differentialeingang verbunden sind, der die durch diese zweiten Photodetektoren gelieferten Signale verarbeitet, und dadurch, daß die Vorverstärker auf demselben Substrat wie die Photodetektoren integriert sind.

FIG. 1

FIG. 2

FIG. 3

FIG. 4 A

FIG. 4 B

FIG. 4 C

FIG. 5 A

FIG. 5 B

FIG. 6

FIG. 7

FIG. 8

FIG. 9A

FIG. 9B

FIG. 10 A

FIG. 10 B

EP 0 562 925 B1